# EUROPÄISCHE PATENTSCHRIFT

(11) **EP 2 551 507 B1**
(45) Veröffentlichungstag und Bekanntmachung des Hinweises auf die Patenterteilung: **03.06.2020**
(21) Anmeldenummer: 12005210.5
(22) Anmeldetag: 16.07.2012
(51) Int. Cl.: F02K 1/82, F02K 1/04

(54) **Abgasturbinenkonus mit dreidimensional profilierter Trennwand sowie plattenartiges Wandelement**
Gas turbine exhaust cone with three dimensional profiled partition wall and board-shaped wall element
Cône d'échappement d'une turbine à gaz avec une paroi de séparation profilée en trois dimensions et élément de paroi en forme de panneau

(30) Priorität: 26.07.2011 DE 102011108533
(43) Veröffentlichungstag der Anmeldung: 30.01.2013
(73) Patentinhaber: Rolls-Royce Deutschland Ltd & Co KG, 15827 Blankenfelde-Mahlow (DE)
(72) Erfinder: Todorovic, Predrag, 15827 Blankenfelde-Mahlow (DE)
(74) Vertreter: Hoefer & Partner Patentanwälte mbB

(56) Entgegenhaltungen:
- FR-A1- 2 396 868
- US-A- 3 507 355
- US-A- 4 137 992
- US-A1- 2003 161 998
- US-B2- 7 784 283

## Beschreibung

Die Erfindung bezieht sich auf einen Gasturbinenabgaskonus, welcher am Ausströmbereich einer Gasturbine angeordnet ist.

Bei Gasturbinen für Flugzeugtriebwerken ist es erforderlich, das Geräuschniveau zu senken. Zu diesem Zweck sind auch unterschiedliche Maßnahmen bekannt, um das aus einer Abströmdüse stromab der Turbine austretende Gasstrahlgeräusch zu minimieren.

Aus dem Stand der Technik ist es bekannt, niedrige Frequenzen, die sich insbesondere bei Triebwerken mit Magerverbrennung ergeben, zu dämpfen. Eine Geräuschdämpfung erfolgt dabei über einen Helmholtz-Resonator. Es ist bekannt, in dem Anströmbereich des Auslasskonus einen derartigen Helmholtz-Resonator auszubilden, während der stromab liegende Endbereich des Auslasskonus lediglich als geometrischer Körper ausgebildet ist. Bekannte Helmholtz-Resonatoren werden dabei als System von radialen Wänden und inneren zylindrischen Führungen ausgestaltet und in Abhängigkeit von den Frequenzen dimensioniert.

Bei den bekannten Konstruktionen erweist es sich als nachteilig, dass diese im Hinblick auf die auftretenden Gastemperaturen mechanisch stark belastet sind und deshalb Verstärkungselemente erfordern. Dies führt zu einer ein relativ hohes Gewicht aufweisenden Konstruktion, auch bedingt durch unterschiedliche Wandungen und Versteifungselemente. Zusätzlich ergibt sich eine sehr aufwendige Fertigung. Die Herstellungskosten werden auch noch durch interne Akustik-Maßnahmen (Perforationen oder Ähnliches) erhöht. Auch die axiale Länge eines derartigen Resonators erfordert einen erheblichen Bauraum und bringt zusätzliches Gewicht. Weiterhin ist eine Geräuschabdichtung zwischen den einzelnen Hohlräumen nicht gegeben.

Zusätzlich zu den aus dem Stand der Technik bekannten Problemen hat es sich bei Gasturbinen als wünschenswert erwiesen, auch die niedrigerfrequenten Schwingungen der Brennkammer, zusätzlich zu den höheren Schwingungen der Turbine, ausreichend zu dämpfen. Hierfür sind tiefe, große Kammern erforderlich, welche durch axiradiale Trennwände unterteilt sind. Die äußeren, perforierten Wandungen eines Gasturbinenabgaskonus sind sehr hohen Gastemperaturen ausgesetzt, während die im Inneren des Auslasskonus installierten Trennwände oder Strukturen weitaus geringere Temperaturen aufweisen. Aus diesem Grund ergibt sich die Thematik der thermischen Expansion bzw. Kontraktion. Dies führt zu erheblichen Bewegungen der Grenzbereiche zwischen den einzelnen Bauelementen, wodurch sich eine nicht unerhebliche Gefahr von Rissbildung und Bauteilversagen ergibt.

Eine unterschiedliche thermische Expansion oder Kontraktion der Trennwände sowie der betroffenen Bauteile führt zu einer nicht-linearen und nicht-gleichen Expansion und/oder Kontraktion der Trennwände (axiradiale Wandungen). Dies führt zu Verwindungen und Verformungen der Wandungen aufgrund der eingebrachten Scherkräfte. Durch die sehr hohen Temperaturunterschiede ist die relative Differential-Expansion oder Kontraktion sehr groß und führt zu plastischen Verformungen der Wandungen und zu einem Gesamtversagen der Struktur. Die Verstärkung der axiradialen Wandungen löst dieses Problem nicht, da Verstärkungen zu weiteren Bewegungsproblemen führen, welche zu Rissen, Brüchen oder einem Versagen von Schweißnähten an der Umfangsstruktur (Innenwandungen und Außenwandungen des Auslasskonus) führen.

Ferner zeigen die US 4,137,992 A und die US 7,784,283 B2 einen Gasturbinenkonus gemäß dem Oberbegriff des Anspruchs 1. Aus der US 3,507,355 A ist ferner ein Wandelement bekannt, welches einen Sandwichaufbau mit einer inneren Wellenstruktur zwischen einer inneren und äußeren Wand zeigt.

Aus der US 2003/161998 A1 ist ein Verfahren und eine Vorrichtung zur Herstellung eines akustisch wirksamen Folienstapels aus geprägten Folienbahnen für einen Hitzeschild eines Fahrzeugs bekannt. Eine Ausgestaltung der Prägewalzen sieht Folienbahnen vor, die Noppen mit drapierter oder gefalteter Struktur aufweisen.

Der Erfindung liegt die Aufgabe zugrunde, einen Gasturbinenabgaskonus der eingangs genannten Art zu schaffen, welcher die Nachteile des Standes der Technik vermeidet und hohe thermische Expansionen oder Kontraktionen erlaubt.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit ein Gasturbinenabgaskonus geschaffen, welcher eine Außenwandung mit einer Vielzahl von Ausnehmungen aufweist, wobei sich entlang der Innenseite der Außenwandung eine Innenwandung erstreckt. Zwischen der Außenwandung und der Innenwandung ist eine Wabenstrukturschicht angeordnet. Durch geeignete Ausnehmungen können die Schalldruckwellen in den Innenraum des Auslasskonus vordringen. Zur Dämpfung insbesondere der niedrigfrequenten Schwingungen sind angrenzend an die Innenwandung eine oder mehrere zu einer zentrischen Achse zentrierte Ringkammern vorgesehen, welche in Umfangsrichtung in einzelne Kammern unterteilt sind. Erfindungsgemäß ist dabei vorgesehen, dass die Unterteilung der jeweiligen Ringkammer in einzelne in Umfangsrichtung angeordnete Kammern durch zumindest eine Trennwand erfolgt, die aus einem blechartigen Material gefertigt ist. Die Trennwand umfasst eine Vielzahl von erhabenen und/oder rückgesetzten Bereichen, die in einer gleichmäßigen Anordnung durch Umformung des blechartigen Materials gebildet sind und eine 3-dimensionale Wellenstruktur bildet. Es ergibt sich somit eine elliptisch-paraboloide Struktur, ähnlich einer eierkartonartigen Anordnung, wobei die erhabenen und die rückgesetzten Bereiche jeweils in zueinander parallelen Linien angeordnet sein können. Es ist jedoch auch möglich, die einzelnen Linien jeweils zueinander zu versetzen, so dass sich eine dichteste Packung ähnlich einer Bienenwabenstruktur ergibt.

Durch die erfindungsgemäß vorgesehenen erhabenen und rückgesetzten Bereiche, welche eine dreidimensionale, regelmäßige Struktur oder ein dreidimensionales, regelmäßiges Muster bilden, ist die Trennwand in der Lage, starke thermische Expansionen an einzelnen Bereichen der Trennwand aufzunehmen. So können einzelne Randbereiche in entgegengesetzten Richtungen thermisch expandiert oder kontrahiert werden, ohne dass die Gesamtstruktur hierdurch beschädigt würde. Dies erweist sich insbesondere an den Randbereichen, an welchen die Trennwand mit weiteren Strukturelementen verbunden ist, als besonders vorteilhaft, da dort keine Rissgefahr durch Überlastung auftritt. Vielmehr verformt sich die dreidimensionale Trennwand in sich selbst so, dass keine durch thermische Effekte hervorgerufenen Kräfte auf benachbarte Bauelemente übertragen werden. Die Trennwand weist somit eine reduzierte Steifigkeit auf und besitzt damit die Möglichkeit, Scherkräfte zu übertragen. Hierdurch ergibt sich eine kontrollierte Reduktion der lokalen Stabilität, welche jedoch die Funktionsfähigkeit und die Gesamtstabilität der Trennwand nicht beeinträchtigt. Es ergibt sich somit die Möglichkeit, unterschiedliche Versetzungen der axiradialen Kanten der Trennwand ohne Einbringung von zu großen Scherkräften zu ermöglichen.

Die erfindungsgemäße Trennwand ist bevorzugterweise durch einen Umformvorgang hergestellt, beispielsweise durch Tiefziehen oder superplastische Deformation. Weiterhin ist es erfindungsgemäß möglich, Schweißverbindungen an ausgewählten Bereichen der Kanten der Trennwand vorzusehen, beispielsweise jeweils an den erhabenen Bereichen oder an den rückgesetzten Bereichen. Dies beeinträchtigt nicht die Verformbarkeit der Trennwand. Erfindungsgemäß ist es auch möglich, die Trennwand mittels eines Lötverfahrens oder eines anderen Fügeverfahrens mit den Strukturelementen des Auslasskonus zu verbinden. Erfindungsgemäß ist somit eine Lösung geschaffen, welche unter Verwendung einer einfachen Struktur der Trennwand bei geringem Gewicht und kostengünstiger Herstellbarkeit die Nachteile des Standes der Technik vermeidet.

In günstiger Ausgestaltung ist die erfindungsgemäße Trennwand so ausgebildet, dass diese im Schnitt wellenförmig oder sägezahnförmig oder sinusoid ist oder durch sich kreuzende Wellenformen gebildet ist. In jedem Fall ergibt sich eine eikartonähnliche Gesamtgestalt, welche unterschiedlichste lokale Expansionen oder Kontraktionen durch thermische Effekte ermöglicht und gleichzeitig geräuschdicht ist.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte Axialschnittansicht eines erfindungsgemäßen Auslasskonus,
- Fig. 3: eine Ansicht des Auslasskonus in perspektivischer Ansicht, teils im Schnitt,

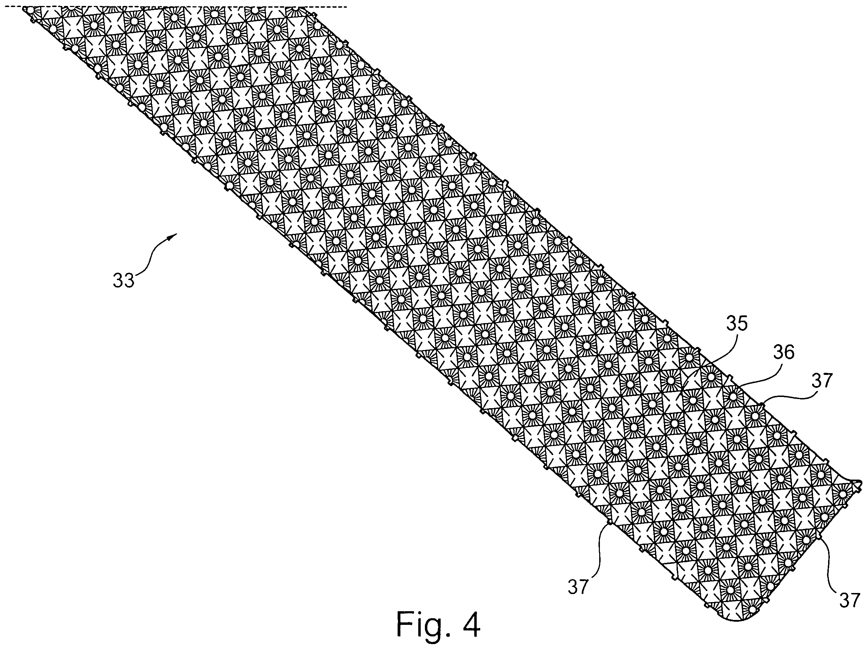

- Fig. 4: eine Teilansicht einer erfindungsgemäßen Trennwand bzw. eines plattenartigen Wandelements,
- Fig. 5: eine weitere Ansicht der Trennwand bzw. des plattenartigen Wandelements in perspektivischer Ansicht, und
- Fig. 6: eine vereinfachte Darstellung der durch thermische Effekte auftretenden Belastungen.

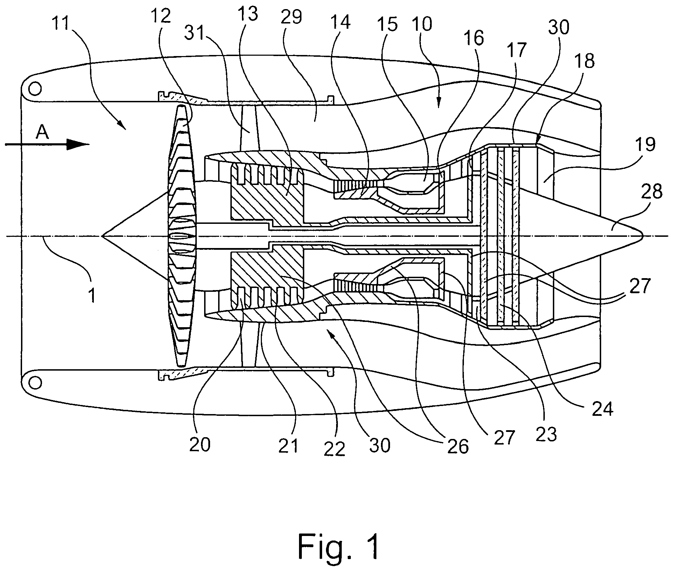

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

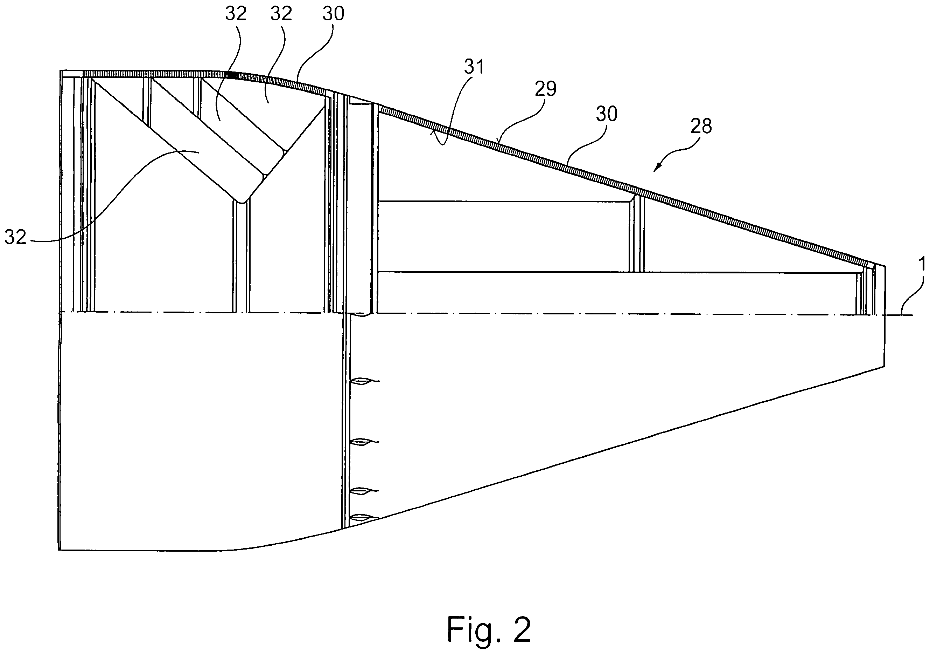

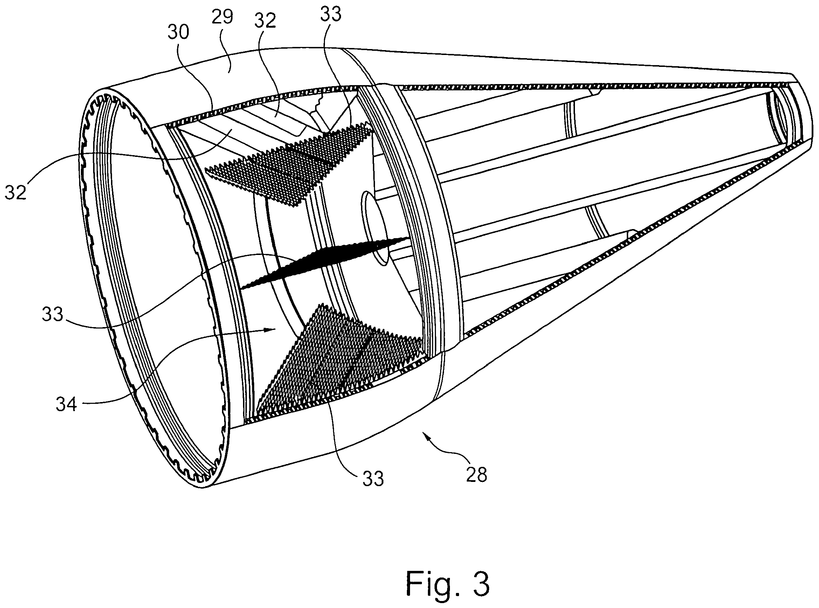

Das Bezugszeichen 28 zeigt einen Auslasskonus. Dieser ist in den Fig. 2 und 3 näher dargestellt. Der Auslasskonus umfasst einen in Fig. 2 links dargestellten Installationsbereich, welcher an einen Turbinenauslass angrenzt, sowie einen im Wesentlichen konischen Mittelbereich (rechter Bereich in Fig. 2). Auf die Darstellung eines Endbereichs wurde verzichtet.

Der Auslasskonus 28 umfasst eine Außenwandung 29, welche mit einer Vielzahl von Ausnehmungen versehen ist. An der Innenseite der Außenwandung 29 ist eine Wabenstrukturschicht 30 angeordnet, an welche sich eine Innenwandung 31 anschließt, welche ebenfalls Schalldurchtrittsausnehmungen aufweist.

Insbesondere der linke Bereich gemäß Fig. 2 ist mit mehreren radial umlaufenden Ringkammern 32 versehen, welche zur zentrischen Achse (Triebwerksachse) 1 geneigt sind und insbesondere zur Dämpfung niedrigfrequenter Schallschwingungen dienen. Die einzelnen Ringkammern 32 sind in Umfangsrichtung, so wie dies aus Fig. 3 ersichtlich ist, durch Trennwände 33 (plattenartige Wandelemente) in einzelne Kammern 34 unterteilt, welche somit segmentartig um den Umfang angeordnet sind und die Ringstruktur der Ringkammer 32 bilden.

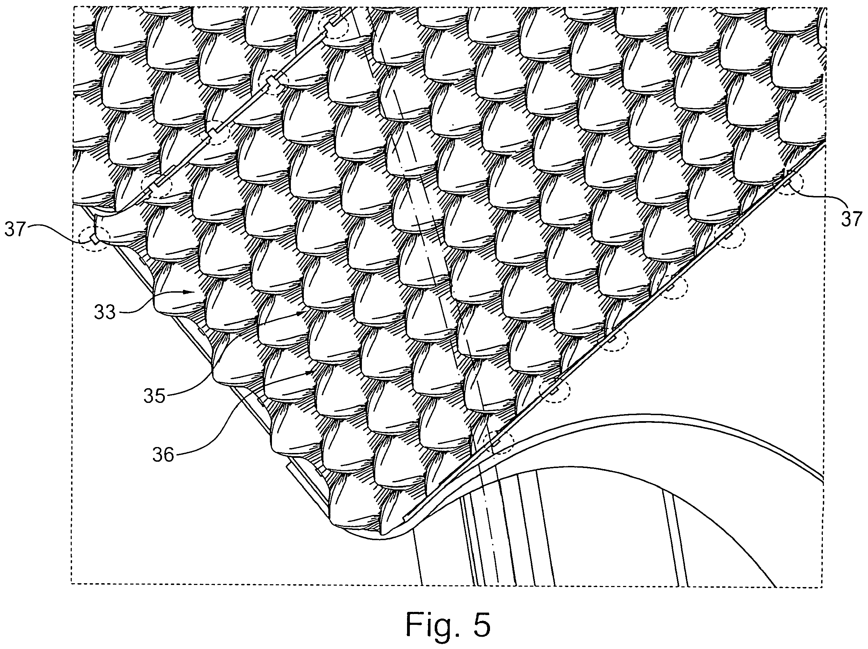

Erfindungsgemäß sind die Trennwände 33 jeweils in Form einer dreidimensionalen Struktur ausgebildet, welche, wie insbesondere aus Fig. 5 ersichtlich ist, erhabene Bereiche 35 und rückgesetzte Bereiche 36 aufweist. Die Trennwand 33 ist aus einem blechartigen Material durch Umformung oder ähnliche formgebende Verfahren hergestellt. Die erhabenen Bereiche 35 und die rückgesetzten Bereiche 36 bilden eine Struktur ähnlich einem Eierkarton, in welchen Hühnereier einlegbar sind. In der Schnittansicht ist die Trennwand 33 wellenförmig oder sinusoid, sie weist somit ein Muster aus Erhebungen und rückgesetzten Bereichen auf. Es ergibt sich somit eine dreidimensionale gewellte Struktur. An den Kantenbereichen (Randbereichen), an welchen die Trennwand 33 mit Strukturelementen des Auslasskonus zu verbinden ist, sind Befestigungslaschen 37 ausgebildet, welche über die Kanten vorstehen und zur Schweißbefestigung dienen.

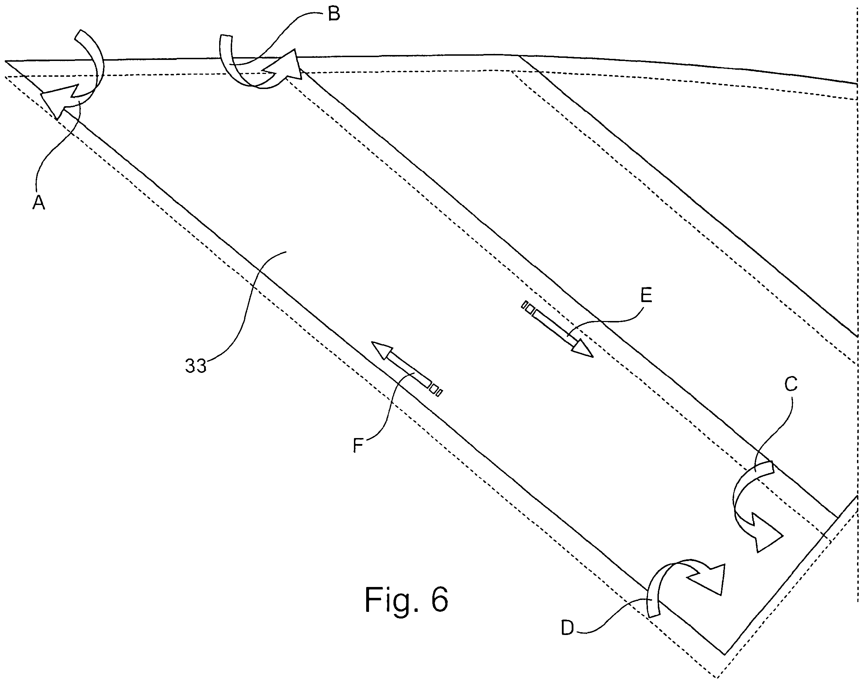

Die Fig. 6 zeigt eine Darstellung, aus welcher sich die durch thermische Ausdehnungen und Kontraktionen ergebenden Belastungen ergeben. Dabei zeigen die gestrichelten Linien im Vergleich zu den durchgezogenen Linien die sich ergebenden Formänderungen. Der Pfeil A zeigt, dass sich an dieser Ecke eine Verkleinerung des Winkels ergibt. An der benachbarten Ecke (Pfeil B) ergibt sich eine Vergrößerung des Winkels. Der Pfeil C an der gegenüberliegenden Wandung zeigt eine Verkleinerung des Winkels, während der Pfeil D eine Vergrößerung des Winkels darstellt. Die Pfeile E und F zeigen die durch Scherkräfte aufgebrachten Belastungen.

Es ist somit ersichtlich, dass die erfindungsgemäße Trennwand (plattenartiges Wandelement) in unterschiedlicher Weise verformbar ist, ohne dass hierdurch Kräfte eingebracht werden, welche die Materialfestigkeit übersteigen und zu einem Bauteilversagen führen würden.

### Bezugszeichenliste:

- 1: Triebwerksachse / zentrische Achse
- 10: Gasturbinentriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Außenwandung
- 30: Wabenstrukturschicht
- 31: Innenwandung
- 32: Ringkammer
- 33: Trennwand / plattenartiges Wandelement
- 34: Kammer
- 35: erhabener Bereich
- 36: rückgesetzter Bereich
- 37: Befestigungslasche

## Patentansprüche

1. Gasturbinenabgaskonus mit einer Außenwandung (29), welche mit einer Vielzahl von Ausnehmungen versehen ist, mit einer an der Innenseite der Außenwandung (29) angeordneten Wabenstrukturschicht (30), welche sich entlang der Innenseite der Außenwandung (29) erstreckt, mit einer sich im Wesentlichen parallel zur Außenwandung (29) erstreckenden, mit der Wabenstruktur (30) verbundenen Innenwandung (31), mit zumindest einer an die Innenwandung (31) angrenzenden und zu einer zentrischen Achse (1) zentrierten Ringkammer (32), , wobei die Ringkammer (32) mittels zumindest einer Trennwand (33) in mehrere Kammern (34) unterteilt ist, wobei die Trennwand (33) aus einem blechartigen Material gefertigt ist, **dadurch gekennzeichnet, dass** die Innenwandung (31) mit Durchgangsausnehmungen versehen ist, welche den Bereich der Wabenstruktur (30) mit der Ringkammer (32) verbinden, wobei die Ringkammer mittels der Trennwand (33) in Umfangsrichtung unterteilt ist und die Trennwand eine Vielzahl von erhabenen Bereichen (35) und/oder rückgesetzten Bereichen (36) mit einer elliptisch-paraboloiden Struktur umfasst, die in einer gleichmäßigen Anordnung durch Umformung des blechartigen Materials gebildet sind.

2. Gasturbinenabgaskonus nach Anspruch 1, **dadurch gekennzeichnet, dass** die Trennwand (33) in Form einer dreidimensionalen Struktur mit einem regelmäßigen Muster mit erhabenen (35) und rückgesetzten (36) Bereichen ausgebildet ist und insbesondere im Schnitt wellenförmig oder sägezahnförmig oder sinusoid ist und/oder dass die dreidimensionale Struktur der Trennwand (33) durch kreuzende Wellenformen gebildet ist.

3. Gasturbinenabgaskonus nach Anspruch 1 oder 2, **dadurch gekennzeichnet, dass** die Trennwand (33) so ausgebildet ist, dass thermische Expansionen in unterschiedlichen Richtungen möglich sind.

4. Gasturbinenabgaskonus nach einem der Ansprüche 1 bis 3, **dadurch gekennzeichnet, dass** an zumindest einer Seite der Trennwand seitliche Befestigungslaschen (37) ausgebildet sind.

## Claims

1. Gas turbine exhaust-gas cone having an outer wall (29) which is provided with a multiplicity of cutouts, having a honeycomb structure layer (30) which is arranged on the inner side of the outer wall (29) and extends along the inner side of the outer wall (29), having an inner wall (31) which extends substantially parallel to the outer wall (29) and is connected to the honeycomb structure (30), having at least one ring chamber (32) which is adjacent to the inner wall (31) and is centred with respect to a central axis (1), wherein the ring chamber (32) is subdivided into multiple chambers (34) by means of at least one separating wall (33), wherein the separating wall (33) is manufactured from a sheet-like material, **characterized in that** the inner wall (31) is provided with passage cutouts which connect the region of the honeycomb structure (30) to the ring chamber (32), wherein the ring chamber is subdivided by means of the separating wall (33) in a circumferential direction, and the separating wall comprises a multiplicity of elevated regions (35) and/or set back regions (36) with an elliptic paraboloidal structure, which are formed in a uniform arrangement by deformation of the sheet-like material.

2. Gas turbine exhaust-gas cone according to Claim 1, **characterized in that** the separating wall (33) is designed in the form of a three-dimensional structure with a regular pattern having elevated (35) and set back (36) regions and is undulating or sawtooth-like or sinusoidal in particular in cross section, and/or **in that** the three-dimensional structure of the separating wall (33) is formed by crossing undulating forms.

3. Gas turbine exhaust-gas cone according to Claim 1 or 2, **characterized in that** the separating wall (33) is designed to allow thermal expansions in different directions.

4. Gas turbine exhaust-gas cone according to one of Claims 1 to 3, **characterized in that** lateral fastening tabs (37) are formed on at least one side of the separating wall.

## Revendications

1. Cône d'échappement d'une turbine à gaz avec une paroi extérieure (29) qui est pourvue d'une pluralité d'évidements, comprenant une couche structurelle en nid d'abeilles (30) disposée au niveau du côté intérieur de la paroi extérieure (29), qui s'étend le long du côté intérieur de la paroi extérieure (29), avec une paroi intérieure (31) s'étendant essentiellement parallèlement à la paroi extérieure (29), reliée à la structure en nid d'abeilles (30), avec au moins une chambre annulaire (32) adjacente à la paroi intérieure (31) et centrée par rapport à un axe central (1), la chambre annulaire (32) étant divisée en plusieurs chambres (34) au moyen d'au moins une paroi de séparation (33), la paroi de séparation (33) étant fabriquée en un matériau de type tôle, **caractérisé en ce que** la paroi intérieure (31) est pourvue d'évidements de passage qui relient la région de la structure en nid d'abeilles (30) à la chambre annulaire (32), la chambre annulaire étant divisée au moyen de la paroi de séparation (33) dans la direction périphérique et la paroi de séparation comprenant une pluralité de zones rehaussées (35) et/ou de zones en retrait (36) avec une structure elliptique-paraboloïde qui sont formées suivant un agencement uniforme par mise en forme du matériau de type tôle.

2. Cône d'échappement d'une turbine à gaz selon la revendication 1, **caractérisé en ce que** la paroi de séparation (33) est réalisée sous la forme d'une structure tridimensionnelle avec un motif régulier avec des zones rehaussées (35) et en retrait (36) et présente en coupe notamment une forme ondulée et/ou en dents de scie ou sinusoïdale et/ou **en ce que** la structure tridimensionnelle de la paroi de séparation (33) est formée par des ondulations s'intersectant.

3. Cône d'échappement d'une turbine à gaz selon la revendication 1 ou 2, **caractérisé en ce que** la paroi de séparation (33) est réalisée de manière à permettre des dilatations thermiques dans différentes directions.

4. Cône d'échappement d'une turbine à gaz selon l'une quelconque des revendications 1 à 3, **caractérisé en ce que** des pattes de fixation latérales (37) sont réalisées au niveau d'au moins un côté de la paroi de séparation.
